# EUROPEAN PATENT SPECIFICATION

(11) **EP 3 223 411 B1**
(45) Date of publication and mention of the grant of the patent: **04.11.2020**
(21) Application number: 17162621.1
(22) Date of filing: 23.03.2017
(51) Int. Cl.: H02K 15/085

(54) **MACHINE FOR PERFORMING WIRE WINDINGS ON CORES ARRANGED ON THE INTERNAL LATERAL SURFACE OF CYLINDRICAL STATORS FOR ELECTRIC MOTORS**
MASCHINE ZUR DURCHFÜHRUNG VON DRAHTWINDUNGEN AUF KERNEN, DIE AUF DER INNEREN SEITLICHEN OBERFLÄCHE VON ZYLINDRISCHEN STATOREN FÜR ELEKTROMOTOREN ANGEORDNET SIND
MACHINE POUR RÉALISER DES ENROULEMENTS DE FIL SUR DES NOYAUX AGENCÉS SUR LA SURFACE LATÉRALE INTERNE DE STATORS CYLINDRIQUES DE MOTEURS ÉLECTRIQUES

(30) Priority: 25.03.2016 IT UA20162025
(43) Date of publication of application: 27.09.2017
(73) Proprietor: Marsilli S.p.A., 26012 Castelleone (CR) (IT)
(72) Inventor: PARATI, Gian Battista, 26012 CASTELLEONE CR (IT)
(74) Representative: Modiano, Micaela Nadia

(56) References cited:
- JP-A- S5 917 851
- JP-A- 2011 004 477
- US-A- 4 858 835
- US-A- 5 906 331
- US-A- 6 098 912

## Description

The present invention relates to a machine for performing wire windings on cores arranged on the internal lateral surface of cylindrical stators for electric motors.

Machines are known for performing wire windings on cores arranged on the internal lateral surface of cylindrical stators for electric motors, i.e. cores that protrude radially from the internal lateral surface of a hollow cylinder that constitutes the body of the stator.

Such machines comprise, generally, a footing, which is provided with means of supporting the body of the stator on which the windings are to be performed, and a winding head which is provided with a tip which has a wire guiding tube through which the wire to be wound is dispensed, in each instance, around a core that protrudes from the internal lateral surface of the stator.

The winding head of these machines is insertable with its tip inside the body of the stator and can move along a direction parallel to the axis of the stator and along a direction perpendicular to the axis of the stator in order to cylindrically perform the winding of the wire around a core and the layering thereof until the winding of a core is complete. For each operation, the body of the stator is rotated about its own axis through an angle of size equal to the angular spacing between two contiguous cores so as to bring a new core to be wound to the tip. This sequence of operation is repeated until all the cores of the stator have been wound.

Although they offer a good level of precision in the execution of the windings, these conventional machines exhibit the drawback of offering a reduced level of productivity that cannot be increased beyond a certain limit simply by increasing the speed of actuation of the winding head, owing to the moments of inertia of the winding head itself which, in order to reach satisfactory speeds, would require overdimensioning such as to make the machine commercially uncompetitive.

US 6098912 discloses a winding machine having freely positionable nozzle.

US 4858835 discloses an equipment for the actuation of needles for the realization of electric motor windings.

US 5906331 discloses a process for providing a stator core with windings.

JP 2011 004477 discloses a method of winding wire material.

JP S59 17851 discloses a winding method of multiple core.

The aim of the present invention is to solve the above mentioned drawback, by providing a machine for performing wire windings on cores arranged on the internal lateral surface of cylindrical stators for electric motors that can achieve levels of productivity that are appreciably superior to those of conventional machines.

Within this aim, an object of the present invention is to provide a machine that is capable of maintaining or exceeding the levels of winding precision that can be obtained with conventional machines.

Another object of the present invention is to provide a machine that can be produced at low cost.

Another object of the present invention is to provide a machine that offers the highest guarantees of safety and reliability in use.

This aim and these and other objects which will become better apparent hereinafter are achieved by a machine for performing wire windings on cores arranged on the internal lateral surface of cylindrical stators for electric motors, as defined in claim 1.

Further characteristics and advantages of the invention will become better apparent from the description of a preferred, but not exclusive, embodiment of the machine according to the invention, which is illustrated by way of non-limiting example in the accompanying drawings wherein:
Figure 1 is a schematic perspective view of the machine according to the invention;
Figure 2 is a schematic plan view from above of the machine according to the
Figure 3 is a schematic side view of the machine according to the invention;
Figure 4 is a cross-sectional view of Figure 3 taken along the line IV-IV;

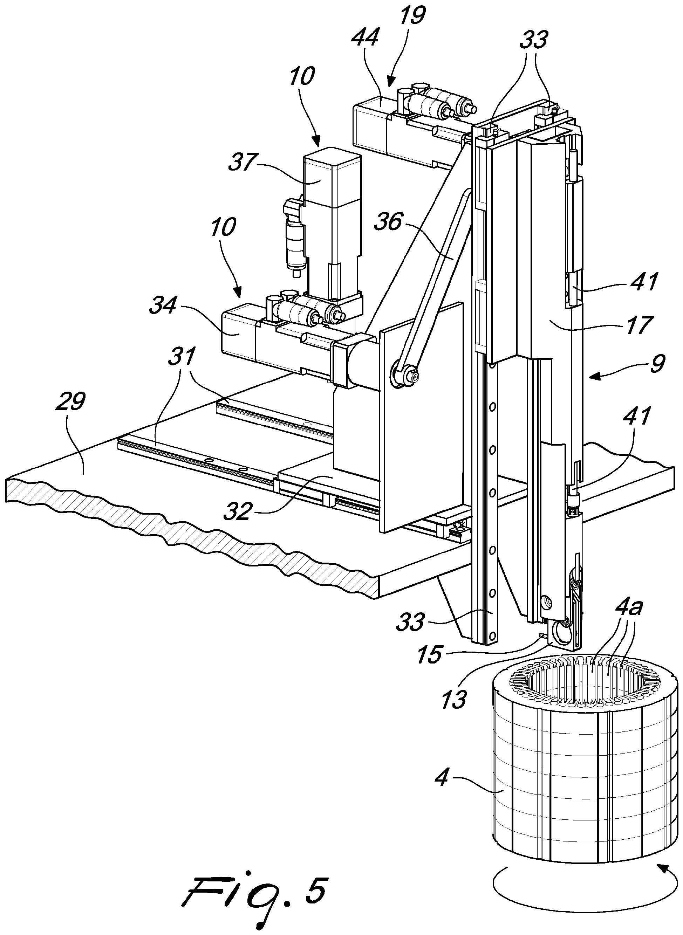

Figure 5 is a perspective view of a portion of the machine according to the invention, with a winding head facing a cylindrical stator;

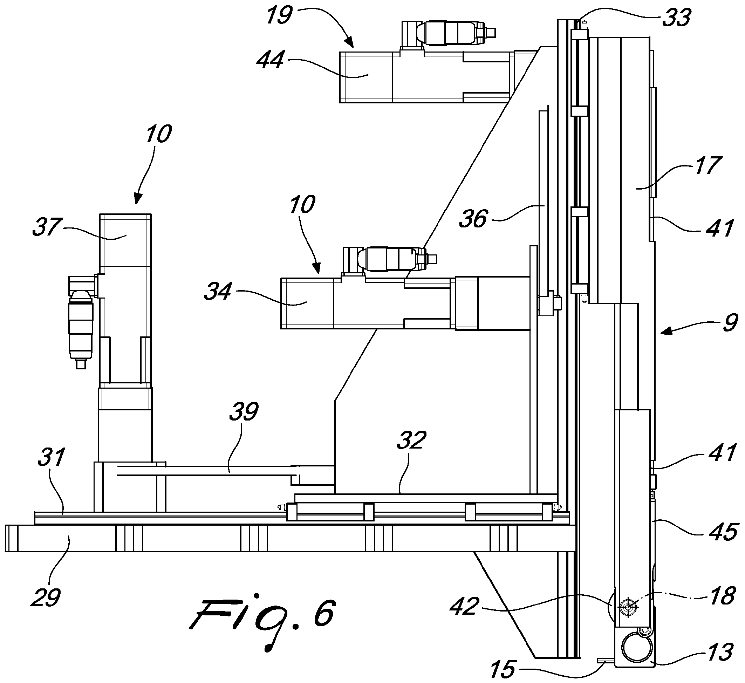

Figure 6 is a side view of the portion of the machine of the previous figure;

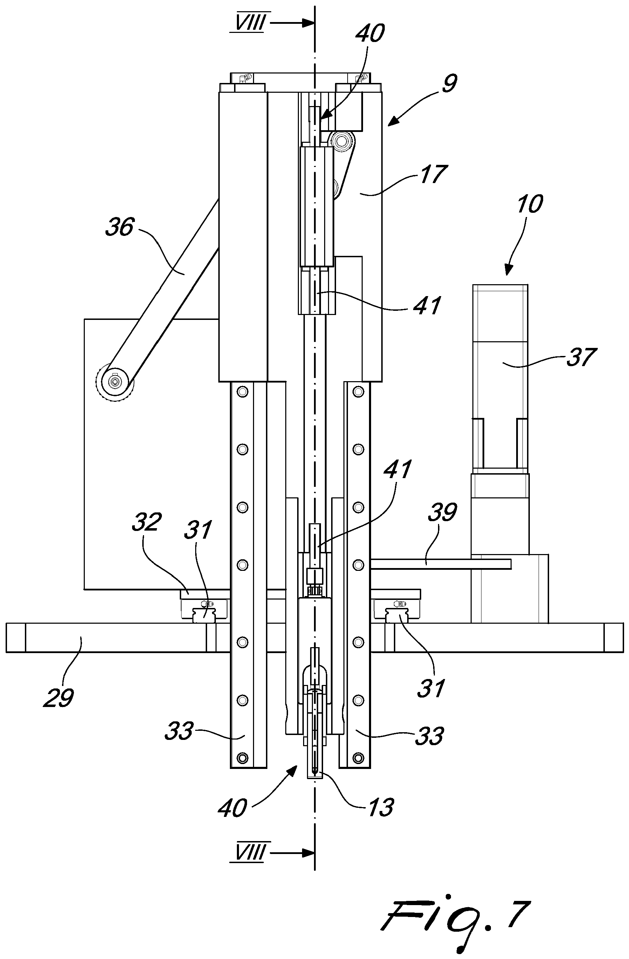

Figure 7 is a front elevation view of the portion of the machine of Figure 5;

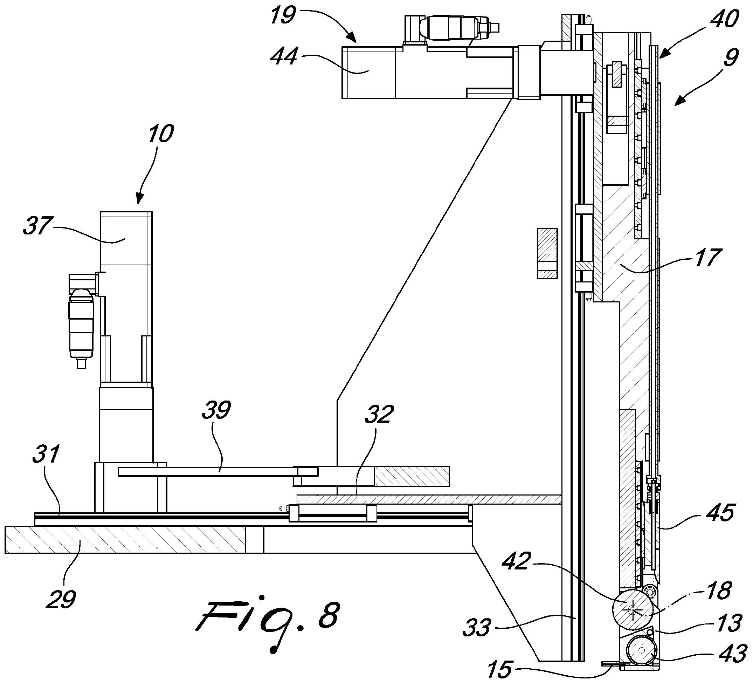

Figure 8 is a schematic cross-sectional view of Figure 7 taken along the line VIII-VIII;

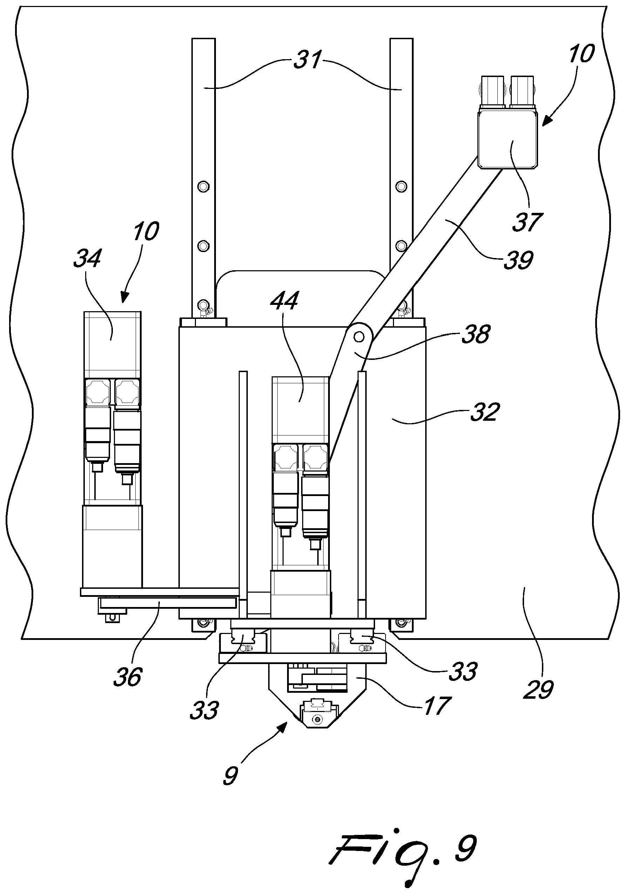

Figure 9 is a plan view from above of the same portion of the machine shown in Figures 5 to 8;
Figure 10 is a cross-sectional view, similar to Figure 8, of a first step of operation of a winding head of the machine according to the invention;
Figure 10a is an enlarged detail of Figure 10;
Figure 11 is a cross-sectional view, similar to Figure 8, of a second step of operation of a winding head of the machine according to the invention;
Figure 12 is a cross-sectional view, similar to Figure 8, of a third step of operation of a winding head of the machine according to the invention;
Figure 12a is an enlarged detail of Figure 12;
Figure 13 is a cross-sectional view, similar to Figure 8, of a fourth step of operation of a winding head of the machine according to the invention;
Figure 14 is a cross-sectional view, similar to Figure 8, of a fifth step of operation of a winding head of the machine according to the invention;
Figure 14a is an enlarged detail of Figure 14;
Figure 15 is a cross-sectional view, similar to Figure 8, of a sixth step of operation of a winding head of the machine according to the invention;
Figures 16 and 17 are plan views from above of two possible variations of embodiment of the machine according to the invention.

With reference to the figures, the machine according to the invention, generally designated by the reference numeral 1, comprises a footing 2 provided with first supporting means 3 which are adapted to keep a substantially cylindrical stator 4 in a winding position, in which it is arranged with its axis aligned with a substantially vertical main axis 5 of the machine.

In the footing 2 there are means 6 of moving the stator 4, which comprise means 7 of rotating the stator 4 about its own axis with respect to the footing 2, according to angles of preset size.

The machine comprises second means 8 of supporting at least two winding heads 9 above the footing 2 and means 10 of actuating these at least two winding heads 9 along a first direction 11 that is substantially parallel to the main axis 5 and along a second direction 12 that is substantially perpendicular to the main axis 5, with respect to the second supporting means 8.

Each one of these winding heads 9 is provided with a tip 13 that supports a wire guiding tube 15 that can face, with its end for dispensing the wire 16 to be wound, the internal lateral surface of the stator 4 and which can be oriented substantially at right angles to the main axis 5.

The winding heads 9 are insertable with their tip 13 into the stator 4 and are actuatable simultaneously in order to simultaneously perform the winding of at least two cores 4a of the stator 4 which protrude from the internal lateral surface of the stator 4.

Each one of the winding heads 9 comprises a head body 17 and a tip 13 which is associated, rotatably about a secondary axis 18 that is substantially perpendicular to the main axis 5, with the head body 17 and which supports the wire guiding tube 15. Movement of the tip 13 about the secondary axis 18 relative to the head body 17 is controlled by suitable movement means 19.

The wire guiding tube 15 can be arranged, by the action of these means 19 of moving the tip 13, at least in a first position, in which it is arranged parallel to the main axis 5, in a second position, in which it is arranged at right angles to the main axis 5, and in a third position in which it is again arranged parallel to the main axis 5, but is oriented in the opposite direction with respect to the first position.

More specifically, the footing 2 comprises a base platform 20, which can be rested on the ground, and four feet 21 that support a substantially horizontal work surface 22 above the base platform 20. Fixed on this work surface 22 is a substantially horizontal guide 23, with which a slider 24 is slideably coupled. The rotation means 7 of the stator 4 comprise a spindle 25 that is supported by the slider 24 and which can be engaged with the stator 4 in order to maintain it with its axis substantially vertical. The spindle 25 is connected to the output shaft of a gearmotor 26 that is supported by the slider 24 and which can be actuated in order to cause the rotation of the stator 4, held by the spindle 25, through angles of preset size in order to position, in each instance, a core 4a to be wound at the tip 13 of a winding head 9, as will be better described below.

The means 6 of moving the stator 4 also comprise means 27 of translating the stator 4 along a direction 28 that is substantially perpendicular to the main axis 5 in order to perform the translation of the stator 4 from the winding position, in which it is arranged with its axis in alignment with the main axis 5, to a loading/unloading position, in which is spaced apart with its axis laterally to the main axis 5.

The means of translation 27 can be constituted, for example, by a gearmotor mounted on the work surface 22 and connected to the slider 24 through a leadscrew transmission, or by another conventional actuator.

The second supporting means 8 comprise a substantially horizontal platform 29 which is supported above the work surface 22 by four posts 30 that protrude from the work surface 22 of the footing 2. The platform 29 is passed through, at least in a central region, by an opening 29a in order to allow the passage of the winding heads 9.

The platform 29 is provided, for each one of the winding heads 9, with a corresponding horizontal sliding guide 31 which is oriented substantially radially with respect to the main axis 5 and is engaged by a corresponding slider 32 that can slide on command along the horizontal sliding guide 31. The slider 32 is fixed to a corresponding vertical sliding guide 33, and the head body 17 of each one of the winding heads 9 slideably engages with a corresponding vertical sliding guide 33 and is slideable on command along the vertical sliding guide 33.

The head body 17 of each winding head 9 can move, in a controlled manner along a corresponding vertical sliding guide 33, by virtue of the action of a gearmotor 34 which is mounted on the slider 32 and is connected to the head body 17 of the corresponding winding head 9 by way of a linkage 35-crank 36 connection.

The sliding of each slider 32 relative to the platform 29 is controlled by a corresponding gearmotor 37 which is mounted on the platform 29 and is connected, with its output shaft, to the corresponding slider 32 by way of a linkage 38-crank 39 connection.

The head body 17 of each one of the winding heads 9 is provided with corresponding means 40 of guiding the wire 16 to be wound. The guiding means 40 can be constituted, in a way that is known per se, by tubes for the passage of the wire 16, which are associated with the head body 17, and by pulleys for transferring the wire. More specifically, in the embodiment shown, a guiding tube 41 is associated with the head body 17 and a pulley 42 for transferring the wire 16 to be wound, which arrives from the guiding tube 41 and enters the wire guiding tube 15, is pivoted around the secondary axis 18.

Conveniently, between the transfer pulley 42 and the wire guiding tube 15, a guide pulley 43 is arranged on the tip 13 for the wire 16 in order to facilitate the entry of the wire 16 to be wound into the wire guiding tube 15.

The means 19 of moving the tip 13 comprise, for each one of the winding heads 9, a gearmotor 44 which is mounted on the head body 17 and is connected with its output shaft, for example by way of a linkage-crank transmission, to a slider 45 which is supported, so that it can slide along a direction parallel to the main axis 5, by the head body 17 of the corresponding winding head 9. This slider 45 is connected, by way of a linkage 46, to the tip 13 of the corresponding winding head 9. The linkage 46 is pivoted to the tip 13 about an axis that is spaced apart from the secondary axis 18 so that a sliding of the slider 45 relative to the head body 17 of the corresponding winding head 9 causes a rotation of the tip 13 about the secondary axis 18 relative to the head body 17 in order to obtain the transition of the wire guiding tube 15 from the first position to the second position and from the second position to the third position, mentioned above, or conversely. In essence, by way of the actuation of the gearmotor 44, it is possible overall to obtain a rotation substantially of 180° of the tip 13 about the secondary axis 18 relative to the head body 17.

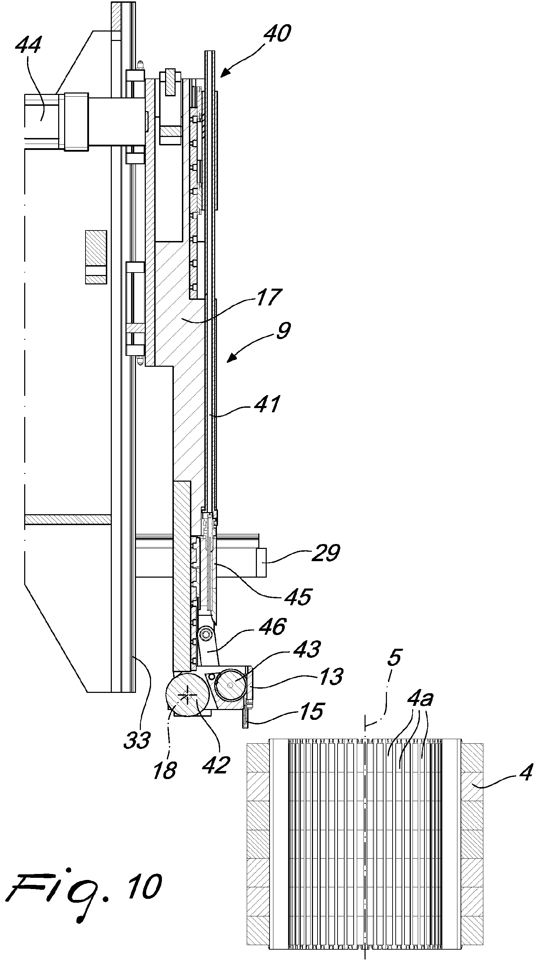

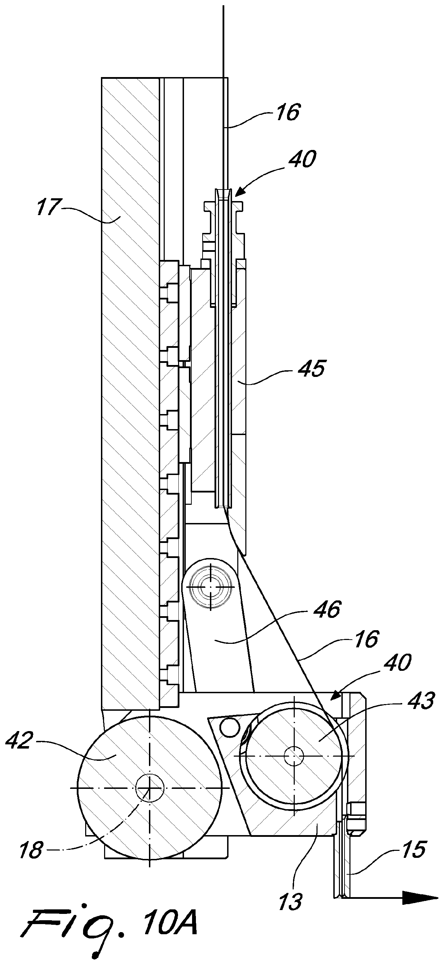

Operation of the machine according to the invention is shown schematically in Figures 10 to 15. For the sake of simplicity and for greater clarity, these figures show a single winding head 9 but, as mentioned, the machine according to the invention is capable of simultaneously using at least two winding heads 9 which are insertable with the tip 13 thereof into the stator 4 with the cores 4a to be wound.

Figure 10 shows the upper "routing" step, and to execute this, the wire guiding tube 15 is oriented parallel to the main axis 5 with its dispensing end directed downward and facing the upper end face of the stator 4 in the winding position. In this step, using the ability to move the winding head 9 along the directions 11 and 12 and the ability to rotate the stator 4 about its own axis, the wire 16 dispensed by the wire guiding tube 15 is fixed to suitable locators that are arranged on the upper end face of the stator 4, before beginning the winding of a core 4a.

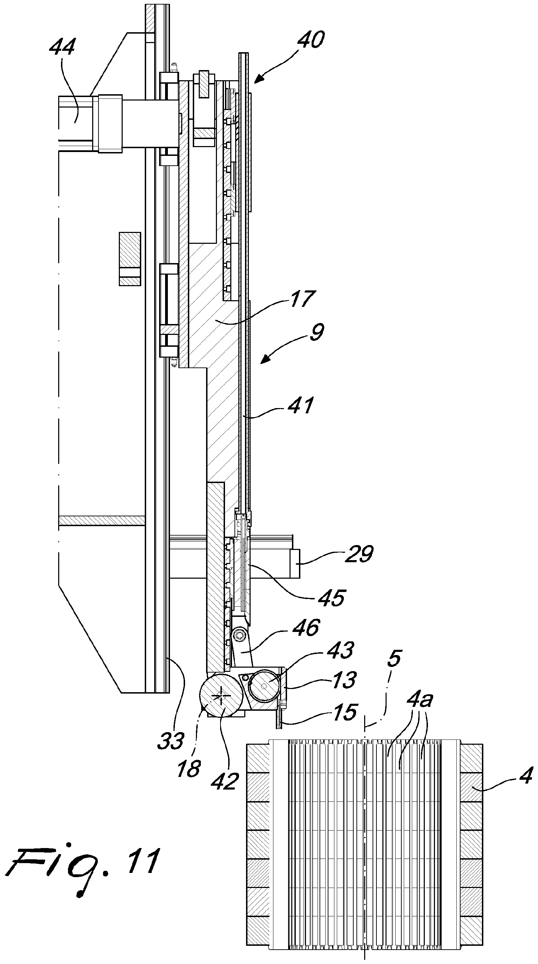

Figure 11 shows the step of approaching the winding head 9 to the axis of the stator 4 to be wound, with the wire guiding tube 15 of the tip 13 arranged vertically, substantially parallel to the main axis 5.

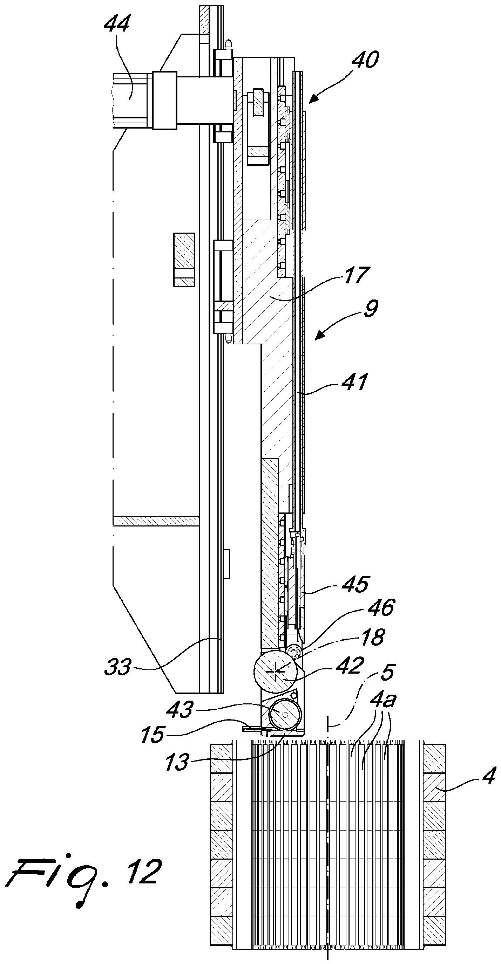

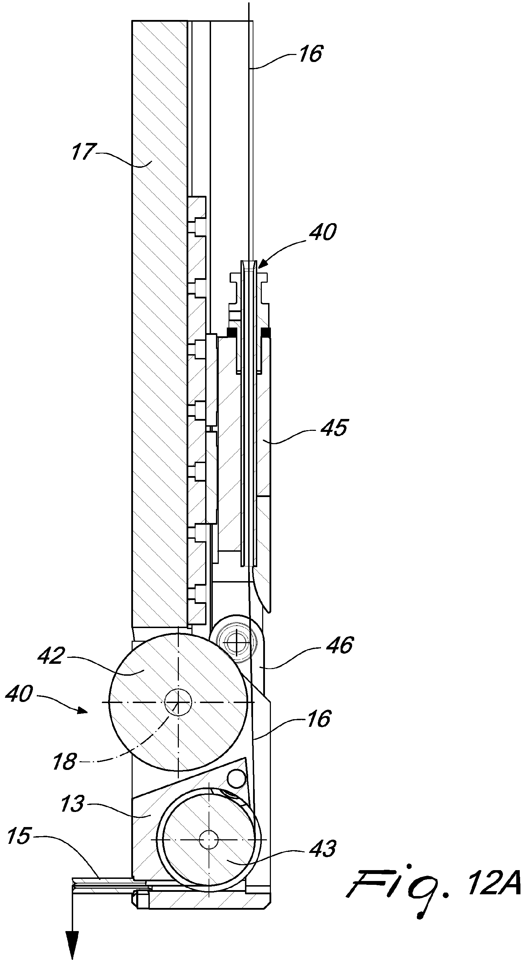

Subsequently, the tip 13, by way of actuating the gearmotor 44, is rotated about the secondary axis 18 relative to the head body 17 so as to bring the wire guiding tube 15 to a substantially horizontal position and, by way of the combined and controlled actuation of the gearmotors 37 and 34, is brought toward the main axis with the dispensing end of the wire guiding tube 15 in a suitable condition to begin the winding of a core 4a that protrudes from the internal lateral surface of the stator 4, as illustrated in Figure 12.

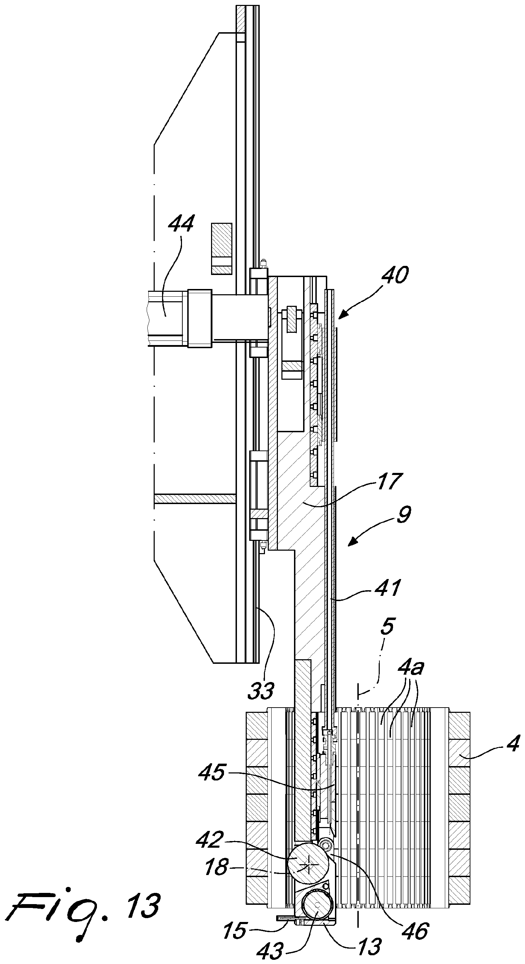

Subsequently, by way of actuating the gearmotor 34, the head body 17 with the tip 13 is moved cyclically parallel to the main axis 5, with an up- and-down movement, and the stator 4 is cyclically rotated about its own axis, in an alternating fashion, by the actuation of the gearmotor 26 in order to carry out the progressive winding of the core 4a. During this movement, the tip 13 is moved cyclically toward or away from the main axis 5 so as to execute the progressive layering of the wire 16 about the core 4a during the winding thereof, as illustrated in Figure 13.

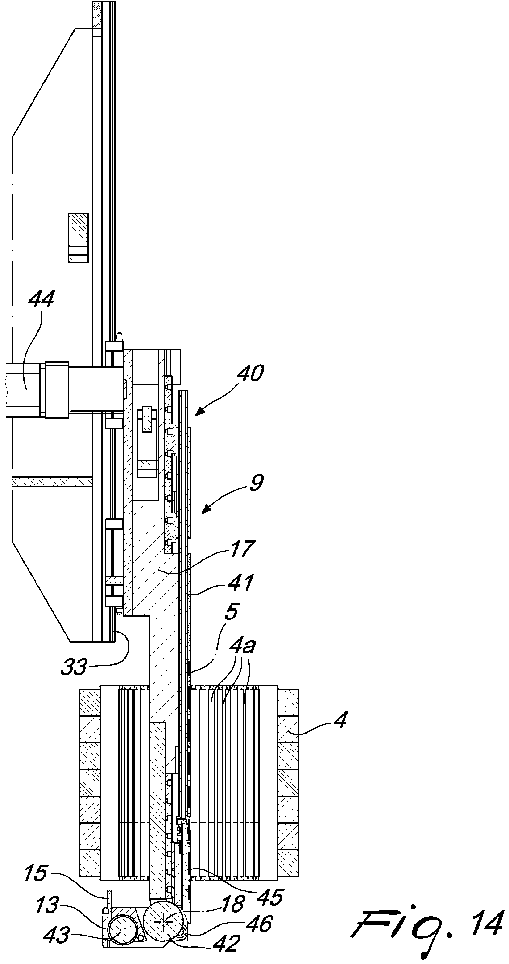

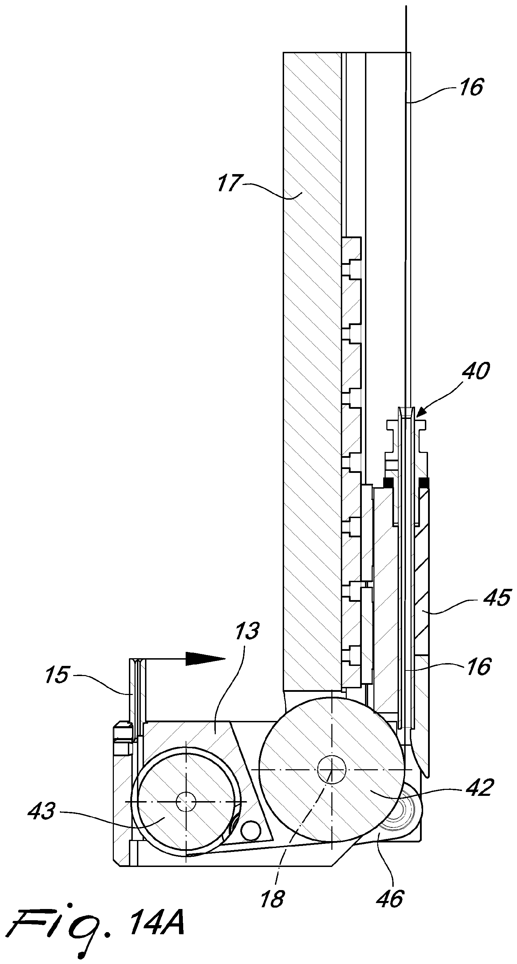

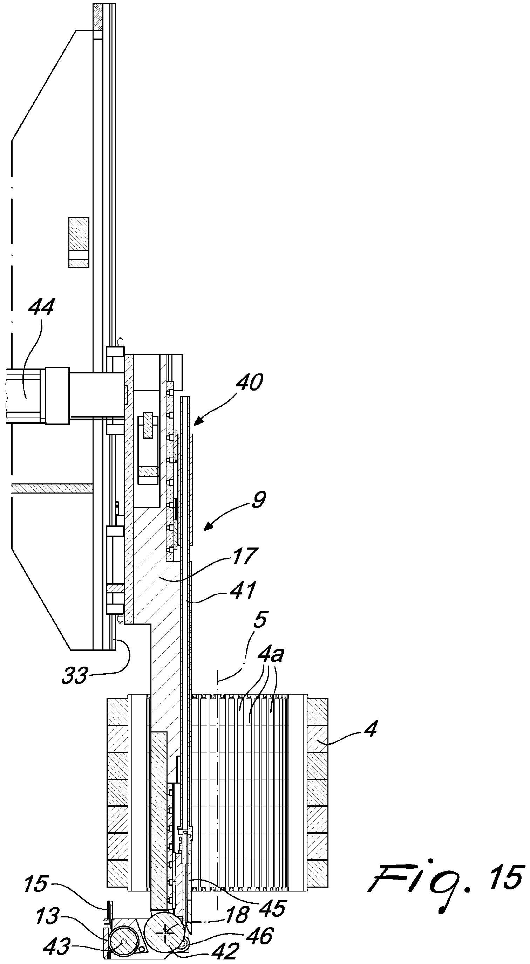

Once the winding of a core 4a is complete, the tip 13, by way of actuating the gearmotor 44, is rotated about the secondary axis 18 until the wire guiding tube 15 is brought parallel to the main axis 5, but with its dispensing end directed upward so as to face the lower end face of the stator 4. With the tip 13 in this position, as shown in Figures 14 and 15, the step of lower "routing" is carried out, during which, using the ability to move the winding head 9 along the directions 11 and 12 and the ability to rotate the stator 4 about its own axis, the wire 16 dispensed by the wire guiding tube 15 is fixed to suitable locators that are arranged on the lower end face of the stator 4, before beginning the winding of a new core 4a.

Subsequently, by way of actuating the gearmotor 44, in the opposite direction with respect to the previous actuation, the tip 13 is brought with the wire guiding tube 15 at right angles to the main axis 5, and the stator 4, by way of actuating the gearmotor 26, is rotated by one step so as to position a new core 4a to be wound at the tip 13. The tip 13 is then actuated in a similar manner to that described with reference to Figure 13 so as to perform the winding of a new core 4a. Once winding of this core 4a is complete, the tip 13 is extracted above the upper end face of the stator 4 and, with the wire guiding tube 15, is brought back parallel to the main axis 5 so as to perform an upper "routing" step once again, in a manner similar to that described with reference to Figure 10.

At this point, the stator 4, by way of actuating the gearmotor 26, is rotated about its own axis by an angle equal to the angular spacing that exists between two contiguous cores so as to position a new core 4a to be wound at the tip 13 and the operation of the machine proceeds, as described previously, until the winding of all the cores 4a present on the internal lateral surface of the stator 4 is complete.

Once the winding of all the cores 4a present on the internal lateral surface of the stator 4 is complete, the tip 13, by way of actuating the gearmotor 34, is extracted above from the stator 4 which, by way of actuating the corresponding means of translation 27, is moved from the winding position to the loading/unloading position in which the stator 4 is unloaded from the spindle 25 and substituted with a new stator to be wound.

As mentioned, in order to perform the winding of the cores 4a present on the internal lateral surface of the stator 4, the machine simultaneously uses at least two winding heads 9 which are inserted with their tip 13 simultaneously into the stator 4, and then simultaneously performs the winding of at least two cores 4a present on the internal lateral surface of the stator 4. In this manner, the machine according to the invention is capable, at least, of substantially halving the time required by a machine of the conventional type to perform the winding of the cores present on the internal lateral surface of a cylindrical stator.

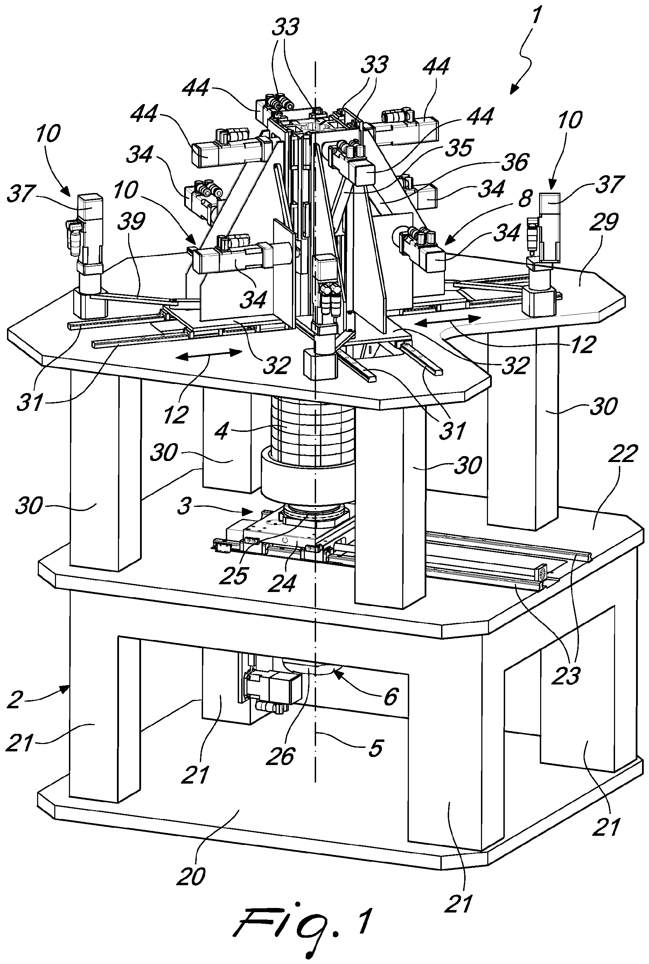

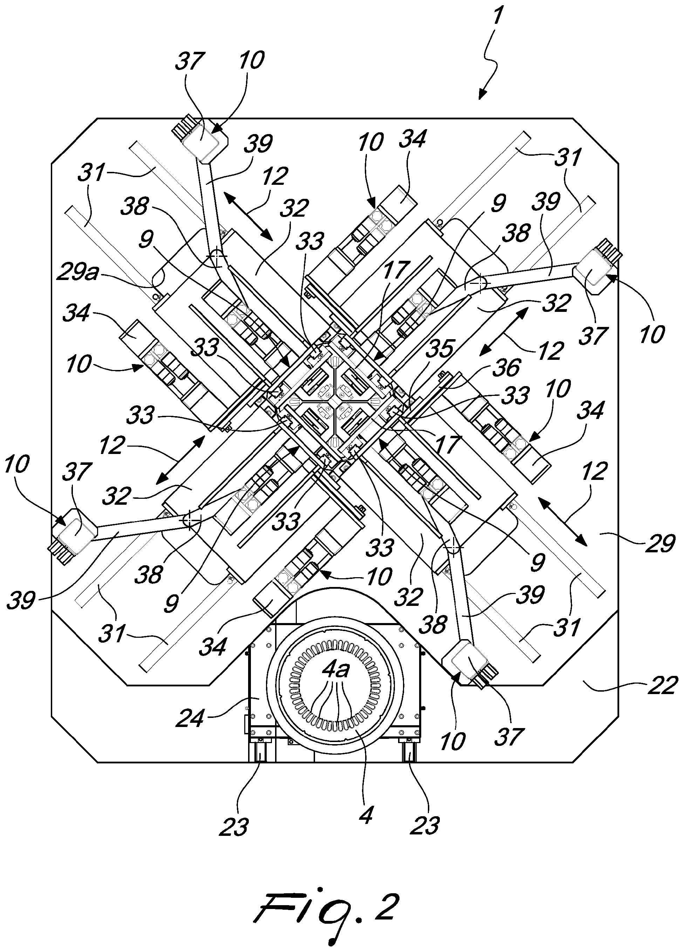

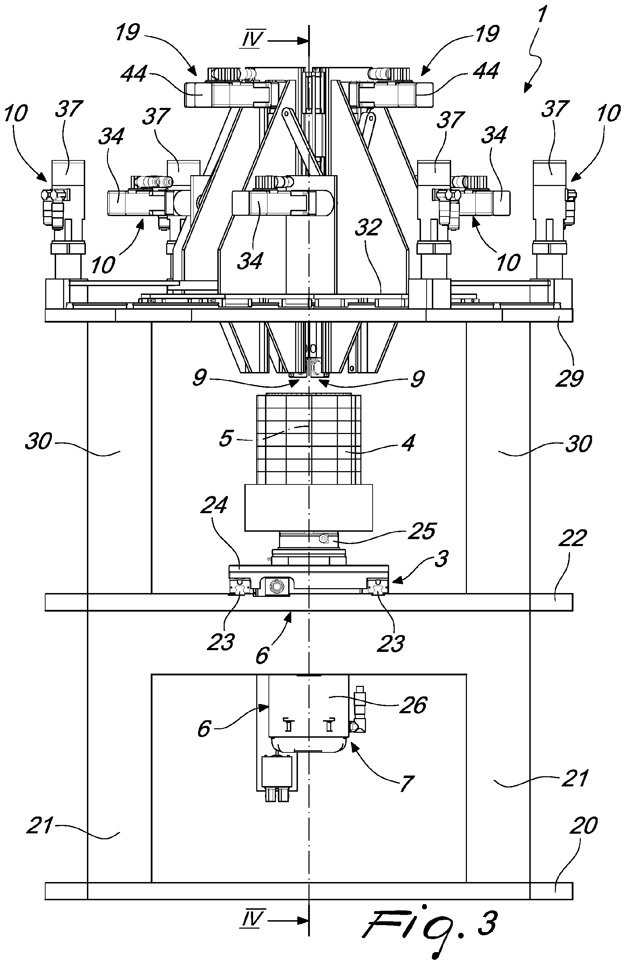

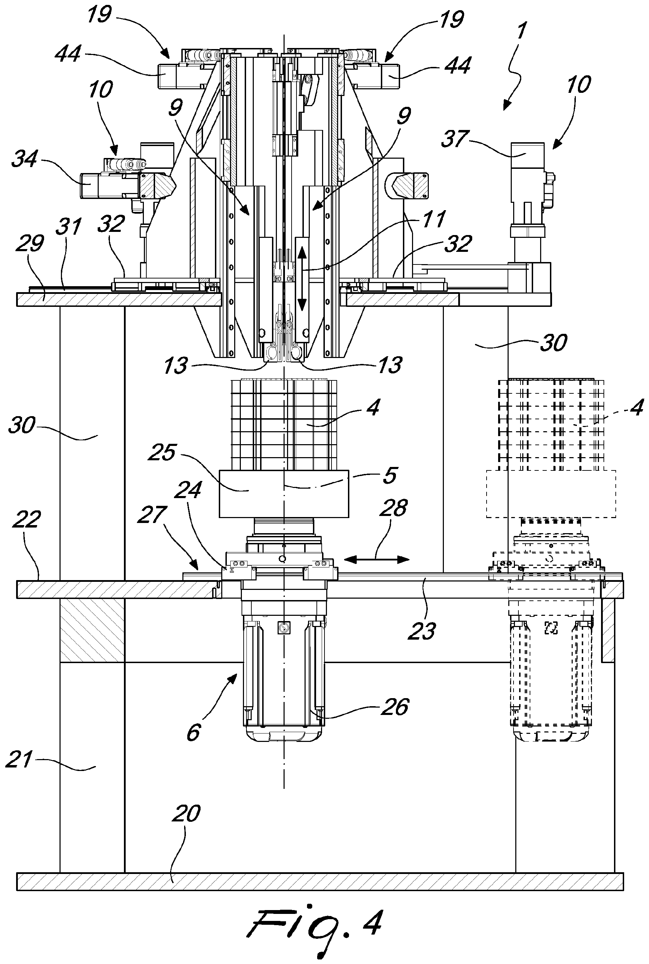

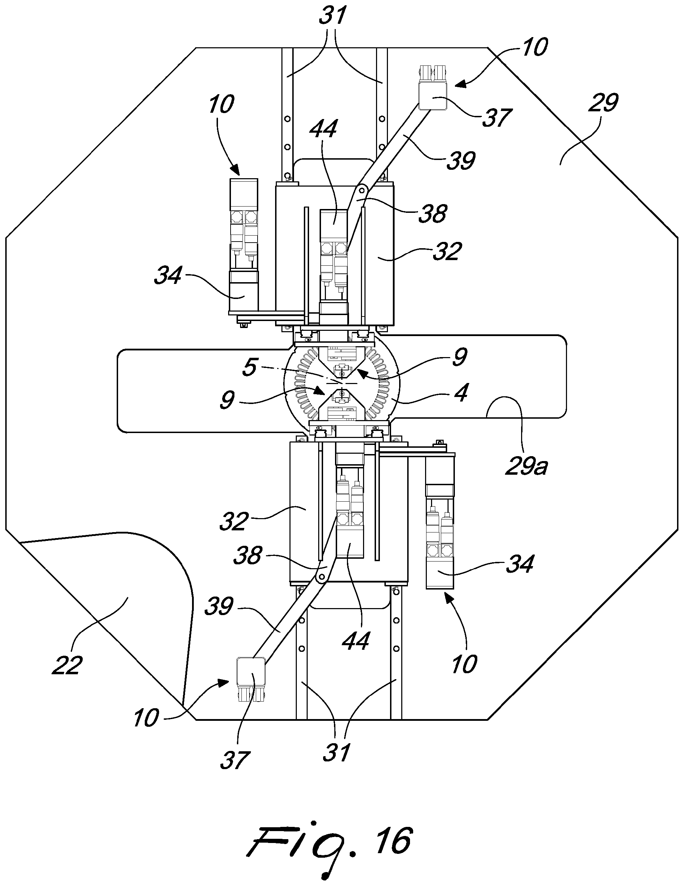

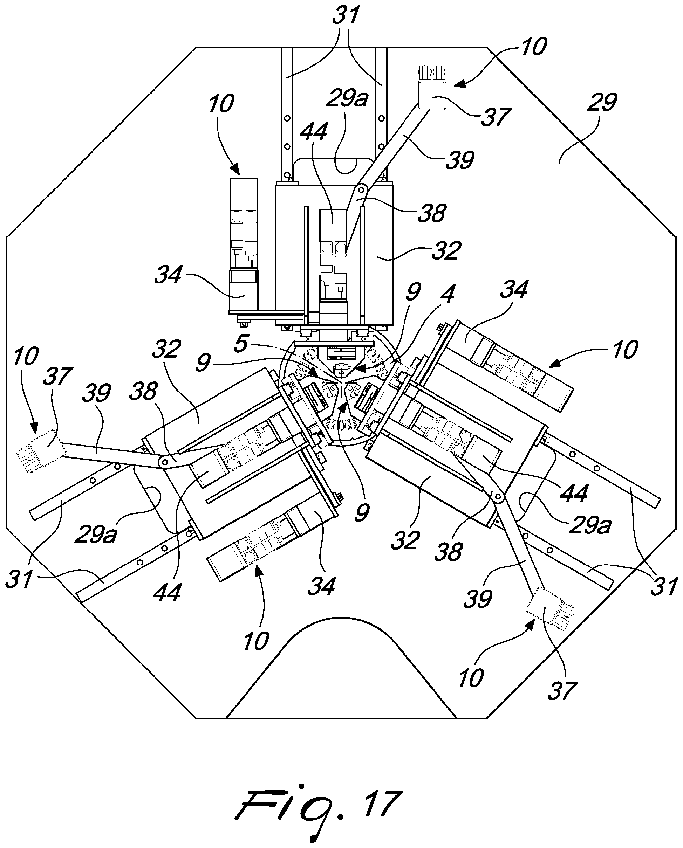

As illustrated in Figure 16, the machine according to the invention can be equipped with two winding heads 9, or, as illustrated in Figure 17, with three winding heads 9, or again, as shown in Figures 1 to 4, it can be equipped with four winding heads 9 which are uniformly mutually spaced apart about the main axis 5 and are simultaneously insertable with their tips 13 into the stator 4.

In practice it has been found that the machine according to the invention fully achieves the set aim since, by using at least two winding heads which are simultaneously insertable with their tip into a stator and which are actuatable so as to simultaneously perform the winding of at least two cores, it appreciably reduces the times required to complete the winding of the cores present on the internal lateral surface of a cylindrical stator. By virtue of this fact, the machine according to the invention is capable of achieving levels of productivity that are appreciably higher than the productivity levels that can be reached by machines of the conventional type.

Furthermore, by virtue of the ability to vary the orientation of the tube for dispensing the wire to be wound, which is arranged on the tip of each winding head, the machine according to the invention is capable of rapidly executing the "routing" operations at the end of the winding of each core.

The machine, thus conceived, is susceptible of numerous modifications and variations, all of which are within the scope of the appended claims. Moreover, all the details may be substituted by other, technically equivalent elements, as long as they fall within the scope of claim 1.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine for performing wire windings on cores arranged on the internal lateral surface of cylindrical stators for electric motors, comprising:
- a footing (2) provided with first supporting means (3) adapted to keep a substantially cylindrical stator (4) in a winding position, in which it is arranged so that its axis is aligned with a substantially vertical main axis (5);
- means (6) of moving said stator (4), which comprise means (7) of rotating the stator (4) about its own axis with respect to said footing (2);
- second means (8) of supporting at least two winding heads (9) above said footing (2);
- means (10) of actuating said at least two winding heads (9) along a first direction (11) that is substantially parallel to said main axis (5) and along a second direction (12) that is substantially perpendicular to said main axis (5), with respect to said second supporting means (8);
each one of said winding heads (9) being provided with a tip (13) that supports a wire guiding tube (15) that can face, with its end for dispensing the wire (16) to be wound, the internal lateral surface of the stator (4) and which can be oriented substantially at right angles to said main axis (5); said at least two winding heads (9) being insertable with their tip (13) into said stator (4) and actuatable simultaneously in order to simultaneously perform the winding of at least two cores (4a) of the stator (4) which protrude from the internal lateral surface of said stator (4), each one of said winding heads (9) comprising a head body (17) and a tip (13) that is associated, so that it can rotate about a secondary axis (18) that is substantially perpendicular to said main axis (5), with said head body (17) and which supports said wire guiding tube (15); means (19) being provided for moving said tip (13) for its rotation about said secondary axis (18) with respect to said head body (17), wherein said wire guiding tube (15) can be arranged, by virtue of the action of said movement means (19) of said tip (13), at least in a first position, in which it is arranged parallel to said main axis (5), in a second position, in which it is arranged at right angles to said main axis (5), and in a third position, in which it is arranged parallel to said main axis (5) but is oriented in the opposite direction with respect to said first position.

2. The machine according to claim 1, **characterized in that** said second supporting means (8) comprise a substantially horizontal platform (29) which is arranged above said footing (2) and is provided, for each one of said winding heads (9), with a horizontal sliding guide (31) which is arranged substantially radially with respect to said main axis (5) and is engaged by a corresponding slider (32) that can slide on command along said horizontal sliding guide (31); a corresponding vertical sliding guide (33) being fixed to said slider (32); the head body (17) of each one of said winding heads (9) slideably engaging a corresponding vertical sliding guide (33) and being able to slide on command along said vertical sliding guide (33).

3. The machine according to one or more of the preceding claims, **characterized in that** said head body (17) of each one of said winding heads (9) is provided with means (40) of guiding the wire (16) to be wound and **in that** a pulley (42) for transferring the wire (16) to be wound, which arrives from said guiding means (40) and enters said wire guiding tube (15), is pivoted around said secondary axis (18).

4. The machine according to one or more of the preceding claims, **characterized in that** a guide pulley (43) for the wire (16) to be wound is arranged on said tip (13), between said transfer pulley (42) and said wire guiding tube (15).

5. The machine according to one or more of the preceding claims, **characterized in that** said means (6) of moving said stator (4) comprise means (27) of translating the stator (4) along a direction (28) that is substantially perpendicular to said main axis (5) for the transition of said stator (4) from said winding position to a loading/unloading position, in which it is spaced apart with its axis laterally to said main axis (5).

6. The machine according to one or more of the preceding claims, **characterized in that** said at least two winding heads (9) comprise three winding heads (9) which are spaced uniformly apart from each other around said main axis (5) and are insertable simultaneously with their tips (13) into said stator (4).

7. The machine according to one or more of the preceding claims, **characterized in that** said at least two winding heads (9) comprise four winding heads (9) which are spaced uniformly apart from each other around said main axis (5) and are insertable simultaneously with their tips (13) into said stator (4).

## Patentansprüche

1. Eine Maschine zur Wicklung von Drähten auf Kerne, die auf der inneren seitlichen Oberfläche von zylindrischen Statoren für Elektromotoren angeordnet sind, Folgendes umfassend:
- einen Ständer (2), ausgestattet mit ersten Stützmitteln (3), ausgebildet, um einen im Wesentlichen zylindrischen Stator (4) in einer Wicklungsposition zu halten, in welcher er so angeordnet ist, dass seine Achse mit einer im Wesentlichen vertikalen Hauptachse (5) ausgerichtet ist;
- Mittel (6) zum Bewegen des Stators (4), die Mittel (7) zum Drehen des Stators (4) um seine eigene Achse mit Bezug auf den Ständer (2) umfassen;
- zweite Mittel (8) zum Tragen mindestens zweier Wickelköpfe (9) oberhalb des Ständers (2);
- Mittel (10) zum Antreiben der mindestens zwei Wickelköpfe (9) in einer ersten Richtung (11), die im Wesentlichen parallel zu der Hauptachse (5) ist, und in einer zweiten Richtung (12), die im Wesentlichen senkrecht zu der Hauptachse (5) ist, mit Bezug auf die zweiten tragenden Mittel (8);
wobei jeder der Wickelköpfe (9) mit einer Spitze (13) versehen ist, die ein Drahtführungsrohr (15) trägt, welches mit seinem Ende zum Abgeben des zu wickelnden Drahtes (16) der inneren seitlichen Oberfläche des Stators (4) zugewandt sein kann und welches im Wesentlichen in rechten Winkeln zu der Hauptachse (5) ausgerichtet sein kann; wobei die mindestens zwei Wickelköpfe (9) mit ihrer Spitze (13) in den Stator (4) eingeführt werden können und gleichzeitig angetrieben werden können, um gleichzeitig das Wickeln mindestens zweier Kerne (4a) des Stators (4) durchzuführen, die aus der inneren seitlichen Oberfläche des Stators (4) herausragen; wobei jeder der Wickelköpfe (9) einen Kopfkörper (17) und eine Spitze (13) umfasst, die drehbar um eine zweite Achse (18), welche im Wesentlichen senkrecht zu der Hauptachse (5) ist, mit dem Kopfkörper (17) verbunden ist und die das Drahtführungsrohr (15) trägt; wobei Mittel (19) bereitgestellt sind, um die Spitze (13) zum Zwecke ihrer Drehung um die zweite Achse (18) mit Bezug auf den Kopfkörper (17) zu bewegen; wobei das Drahtführungsrohr (15) mit Hilfe der Bewegungsmittel (19) für die Spitze (13) mindestens in einer ersten Position angeordnet werden kann, in welcher es parallel zu der Hauptachse (5) angeordnet ist, in einer zweiten Position, in welcher es in rechten Winkeln zu der Hauptachse (5) angeordnet ist, und in einer dritten Position, in welcher es parallel zu der Hauptachse (5) angeordnet, aber in die der ersten Position entgegengesetzte Richtung ausgerichtet ist.

2. Die Maschine gemäß Anspruch 1, **dadurch gekennzeichnet, dass** die zweiten tragenden Mittel (8) eine im Wesentlichen horizontale Plattform (29) umfassen, welche oberhalb des Ständers (2) angeordnet und für jeden der Wickelköpfe (9) mit einer horizontalen Gleitführung (31) ausgestattet ist, die im Wesentlichen radial zu der Hauptachse (5) angeordnet ist und mit einem dazugehörigen Schieber (32) in Eingriff steht, der auf Befehl die horizontale Gleitführung (31) entlanggleiten kann; wobei eine entsprechende vertikale Gleitführung (33) an dem Schieber (32) befestigt ist; wobei der Kopfkörper (17) jedes der Wickelköpfe (9) verschiebbar in eine entsprechende vertikale Gleitführung (33) eingreift und in der Lage ist, auf Befehl die vertikale Gleitführung (33) entlangzugleiten.

3. Die Maschine gemäß einem oder mehreren der obigen Ansprüche, **dadurch gekennzeichnet, dass** der Kopfkörper (17) jedes der Wickelköpfe (9) mit Mitteln (40) zur Führung des zu wickelnden Drahts (16) ausgestattet ist, und dadurch, dass eine Umlenkrolle (42) zum Übertragen des zu wickelnden Drahts (16), der von den Führungsmitteln (40) kommt und in das Drahtführungsrohr (15) eintritt, drehgelenkig um die zweite Achse (18) herum angebracht ist.

4. Die Maschine gemäß einem oder mehreren der obigen Ansprüche, **dadurch gekennzeichnet, dass** eine Führungsrolle (43) für den zu wickelnden Draht (16) an der Spitze (13), zwischen der Umlenkrolle (42) und dem Drahtführungsrohr (15), angeordnet ist.

5. Die Maschine gemäß einem oder mehreren der obigen Ansprüche, **dadurch gekennzeichnet, dass** die Mittel (6) zum Bewegen des Stators (4) Mittel (27) umfassen, um den Stator (4) in eine Richtung (28) zu bewegen, die im Wesentlichen senkrecht zu der Hauptachse (5) ist, zum Zwecke des Übergangs des Stators (4) von der Wickelposition in eine Lade-/Abladeposition, in welcher er mit seiner Achse seitlich von der Hauptachse (5) beabstandet ist.

6. Die Maschine gemäß einem oder mehreren der obigen Ansprüche, **dadurch gekennzeichnet, dass** die mindestens zwei Wickelköpfe (9) drei Wickelköpfe (9) umfassen, die um die Hauptachse (5) einheitlich voneinander beabstandet und gleichzeitig mit ihren Spitzen (13) in den Stator (4) einführbar sind.

7. Die Maschine gemäß einem oder mehreren der obigen Ansprüche, **dadurch gekennzeichnet, dass** die mindestens zwei Wickelköpfe (9) vier Wickelköpfe (9) umfassen, die um die Hauptachse (5) einheitlich voneinander beabstandet und gleichzeitig mit ihren Spitzen (13) in den Stator (4) einführbar sind.

## Revendications

1. Machine destinée à réaliser des enroulements de fil sur des noyaux, agencés sur la surface latérale interne de stators cylindriques pour des moteurs électriques, comprenant :
- un pied (2), prévu avec un premier moyen de support (3), adapté pour maintenir un stator sensiblement cylindrique (4) dans une position d'enroulement, dans laquelle il est agencé, de sorte que son axe est aligné avec un axe principal sensiblement vertical (5) ;
- des moyens (6) de déplacement dudit stator (4), qui comprennent des moyens (7) de rotation du stator (4) autour de son propre axe par rapport audit pied (2) ;
- des seconds moyens de support (8) d'au moins deux têtes d'enroulement (9) au-dessus dudit pied (2) ;
- des moyens (10) d'actionnement desdites au moins deux têtes d'enroulement (9) le long d'une première direction (11) qui est sensiblement parallèle audit axe principal (5) et le long d'une seconde direction (12) qui est sensiblement perpendiculaire audit axe principal (5), par rapport audit second moyen de support (8) ;
chacune desdites têtes d'enroulement (9) étant munie d'un bout (13), qui supporte un tube de guidage de fil (15) qui peut faire face, avec son extrémité destinée à délivrer le fil (16) à enrouler, à la surface latérale interne du stator (4) et qui peut être orientée sensiblement à angles droits par rapport audit axe principal (5) ; lesdites au moins deux têtes d'enroulement (9) pouvant être insérées avec leur bout (13) dans ledit stator (4) et pouvant être actionnées simultanément afin de réaliser simultanément l'enroulement d'au moins deux noyaux (4a) du stator (4), qui font saillie depuis la surface latérale interne dudit stator (4), chacune desdites têtes d'enroulement (9) comprenant un corps de tête (17) et un bout (13) qui est associé, de sorte qu'il peut tourner autour d'un axe secondaire (18) qui est sensiblement perpendiculaire audit axe principal (5), avec ledit corps de tête (17) et qui supporte ledit tube de guidage de fil (15) ; des moyens (19), prévus pour déplacer ledit bout (13) pour sa rotation autour dudit axe secondaire (18) par rapport audit corps de tête (17), dans lequel ledit tube de guidage de fil (15) peut être agencé, du fait de l'action dudit moyen de déplacement (19) dudit bout (13), au moins dans une première position, dans laquelle il est agencé parallèle audit axe principal (5), dans une deuxième position, dans laquelle il est agencé à angles droits par rapport audit axe principal (5) et dans une troisième position, dans laquelle il est agencé parallèle audit axe principal (5) mais est orienté dans la direction opposée par rapport à ladite première position.

2. Machine selon la revendication 1, **caractérisée en ce que** lesdits seconds moyens de support (8) comprennent une plate-forme sensiblement horizontale (29), qui est agencée au-dessus dudit pied (2) et est munie, pour chacune desdites têtes d'enroulement (9), d'un guide coulissant horizontal (31), qui est agencé sensiblement radialement par rapport audit axe principal (5) et est mis en prise par un coulisseau (32) correspondant qui peut coulisser sur commande le long dudit guide coulissant horizontal (31) ; un guide coulissant vertical (33) correspondant étant fixé audit coulisseau (32) ; le corps de tête (17) de chacune desdites têtes d'enroulement (9) mettant en prise à coulissement un guide coulissant vertical (33) correspondant et étant apte à coulisser sur commande le long dudit guide coulissant vertical (33).

3. Machine selon une ou plusieurs des revendications précédentes, **caractérisée en ce que** ledit corps de tête (17) de chacune desdites têtes d'enroulement (9) est muni de moyens (40) de guidage du fil (16) à enrouler et **en ce qu'**une poulie (42), destinée à transférer le fil (16) à enrouler, qui arrive dudit moyen de guidage (40) et pénètre dans ledit tube de guidage de fil (15), est mise en pivotement autour dudit axe secondaire (18).

4. Machine selon une ou plusieurs des revendications précédentes, **caractérisée en ce qu'**une poulie de guidage (43) pour le fil (16) à enrouler est agencée sur ledit bout (13), entre ladite poulie de transfert (42) et ledit tube de guidage de fil (15).

5. Machine selon une ou plusieurs des revendications précédentes, **caractérisée en ce que** lesdits moyens (6) de déplacement dudit stator (4) comprennent des moyens (27) de translation du stator (4) le long d'une direction (28) qui est sensiblement perpendiculaire audit axe principal (5) pour le passage dudit stator (4) de ladite position d'enroulement à une position de chargement / déchargement, dans laquelle il est espacé avec son axe latéralement par rapport audit axe principal (5).

6. Machine selon une ou plusieurs des revendications précédentes, **caractérisée en ce que** lesdites au moins deux têtes d'enroulement (9) comprennent trois têtes d'enroulement (9), qui sont espacées uniformément les unes des autres autour dudit axe principal (5) et peuvent être insérées simultanément avec leurs bouts (13) dans ledit stator (4).

7. Machine selon une ou plusieurs des revendications précédentes, **caractérisée en ce que** lesdites au moins deux têtes d'enroulement (9) comprennent quatre têtes d'enroulement (9), qui sont espacées uniformément les unes des autres autour dudit axe principal (5) et peuvent être insérées simultanément avec leurs bouts (13) dans ledit stator (4).
